# EUROPEAN PATENT APPLICATION

(11) **EP 3 912 786 A1**
(43) Date of publication of application: **24.11.2021**
(21) Application number: 21174162.4
(22) Date of filing: 17.05.2021
(51) Int. Cl.: B29C 41/46, B29C 41/06, B29C 41/38, B29C 41/52, B29C 33/02, B29C 33/00, B29C 33/30

(54) **CAVITY MOLD AND CAVITY MOLD SYSTEM**

(30) Priority: 21.05.2020 SG 10202004764Y
(71) Applicant: Eastern Petroleum Services B.V., Willemstad (CW)
(72) Inventor: Thomas, Gordon William, Jan Thiel Willemstad (CW)
(74) Representative: Doherty, William

(57) **Abstract**

A cavity mold comprises two or more sub-molds; and one or more gasket disposed between two adjacent sub-molds; wherein the gasket seals heating and cooling mediums when the cavity mold is assembled; wherein each of the two or more sub-molds comprises an outer casing; an inner casing on which a molded item is formed, wherein the cavity mold is assembled, a cavity is formed in the space between the outer casing and the inner casing; at least one heating/cooling mediums input pipe that is fluidly coupled with heating and cooling medium sources and the cavity, wherein heating and cooling mediums are pumped or compressed via the at least one heating/cooling mediums input pipe into the cavity, thereby the heating and cooling mediums pass through the cavity of the cavity mold; and at least one heating/cooling mediums return pipe that is fluidly coupled with the heating and cooling medium sources and the cavity, wherein the heating and cooling mediums are pumped via the at least one heating/cooling mediums return pipe out of the cavity; and wherein at least one of the two or more sub-molds further comprises a feed channel being through the outer casing and the inner casing; wherein the feed channel allows molding materials to be fed into the inside of the inner casing. A cavity mold system employs the cavity mold.

## Description

### Field of the Invention

The present invention relates to molding, and particularly to a cavity mold with direct internal heating and cooling, and to a cavity mold system employing the cavity mold, where the cavity mold system is able to produce rotationally molded items at one work station.

### Background of the Invention

Rotational molding is how most hollow plastic items including large containers are made. The rotational molding usually follows the procedures:
inserting plastic powder or pellets into a mold;
bolting the mold together on a frame;
placing the complete mold and the structure holding the mold(s) into an oven;
heating the mold so that the polymer/plastic powder or pellets are melt and distributed evenly over the inner surface of the mold by rotating the mold bi-directionally in the oven; the heating of the mold inner surface is critical and the temperature has to be raised to the melt point of the type of material being utilized; the amount of powder or pellets that are injected into the mold governs the thickness of the molded item;
removing the mold to a cooling area, still being rotated, to keep the layer inside the mold from deforming (sagging) as it gradually cools; the rate of cooling is also critical to the quality of the finished product avoiding distortions etc.; and
finally moving the mold to a demolding area where the mold is opened and the molded item removed.

The mold can then be bolted back together and the production cycle starts all over again.

Materials in liquid form can also be placed in the molds following the same process. This is referred to as "slush" molding.

The main constraints of current rotational molding include that:
(i) the control of heating and cooling of the internal surface of the molds is inaccurate and often uneven;
(ii) the rotational molding equipment is very large, exceedingly heavy, and expensive;
(iii) to run the operation is very expensive;
(iv) heavy consumption of energy results in air pollution; and
(v) a very large factory space is required.

The operation of the current rotational molding typically requires three factory areas:
1. Assembly & demolding area for assembling molds to start the process and demolding for removing the molded items after the process is completed; bolting/unbolting the molds onto a support frame (spider) is often a manual process;
2. Heating area for housing an oven into which the molds on the frame are inserted; the oven that needs to continuously burn fuel (diesel, fuel oil, kerosene or gas) with the majority of the heat being lost up the chimney is terribly inefficient and emits serious volumes of CO₂ and other pollutants; and
3. Cooling area as cooling station; the molds and supporting frame(s) are cooled down using forced air and/or water spray; after cooling, the frame and molds are returned to the assembly & demolding area; control over the cooling rate of the inner mold surface and/or molded items by way of this crude manner is minimal.

Therefore, there is an imperative need to fully or substantially eliminate the constraints existing in the current rotational molding.

### Summary of the Invention

The present invention provides a cavity mold. In certain embodiments, the cavity mold comprises two or more sub-molds; and one or more gasket disposed between two adjacent sub-molds; wherein the gasket seals heating and cooling mediums when the cavity mold is assembled; wherein each of the two or more sub-molds comprises an outer casing; an inner casing on which a molded item is formed, wherein the cavity mold is assembled, a cavity is formed in the space between the outer casing and the inner casing; at least one heating/cooling mediums input pipe that is fluidly coupled with heating and cooling medium sources and the cavity, wherein heating and cooling mediums are pumped or compressed via the at least one heating/cooling mediums input pipe into the cavity, thereby the heating and cooling mediums pass through the cavity of the cavity mold; and at least one heating/cooling mediums return pipe that is fluidly coupled with the heating and cooling medium sources and the cavity, wherein the heating and cooling mediums are pumped via the at least one heating/cooling mediums return pipe out of the cavity; and wherein at least one of the two or more sub-molds further comprises a feed channel being through the outer casing and the inner casing; wherein the feed channel allows molding materials to be fed into the inside of the inner casing.

In certain embodiments of the cavity mold, each of the two or more sub-molds further comprises at least two isolation valves for regulating the heating or cooling medium flows; wherein one of the at least two isolation valves is disposed on the at least one heating/cooling mediums input pipe, and one of the at least two isolation valves is disposed at least one heating/cooling mediums return pipe.

In certain embodiments of the cavity mold, each of the two or more sub-molds further comprises at least one temperature sensor being disposed on the outer casing and inside the cavity for recording the temperature of the heating and cooling mediums.

In certain embodiments of the cavity mold, the feed channel serves as a vent to release any pressure inside the cavity mold.

In certain embodiments of the cavity mold, each of the two or more sub-molds further comprises at least two bushes being provided on the mold flange of the sub-molds for allowing a guide rod to ensure accurate alignment of the sub-molds.

In certain embodiments of the cavity mold, the inner casing and the outer casing can be assembled and disassembled.

In certain embodiments of the cavity mold, the inner casing and the outer casing are fixed together.

In certain embodiments of the cavity mold, the at least two isolation valves enable removal or replacement of the cavity mold.

The present invention also provides a rotational frame subsystem.

In certain embodiments, the rotational frame subsystem comprises an inner frame serving as a secondary rotating carriage supporting the cavity mold and opening/closing the cavity mold; an outer frame serving as a primary rotating carriage; wherein the inner frame is disposed within the outer frame; a support structure; an inner frame driving motor being disposed onto the outer frame, and being mechanically coupled with the inner frame; wherein the inner frame driving motor revolves the inner frame as the secondary rotation; and an outer frame driving motor being disposed onto the support structure via a motor joint, and mechanically coupled with the outer frame, where the outer frame driving motor revolves the outer frame as the main rotation; and a first multi-pipe rotary joint being mounted on the support structure and connecting the outer frame to the support structure; a second multi-pipe rotary joint being mounted on an inner frame and connecting the outer frame and the inner frame; wherein the first multi-pipe rotary joint allows pipes for input medium and return medium to be fed along a member of the outer frame to the second multi-pipe rotary joint; wherein the second multi-pipe rotary joint is fluidly coupled with a heating/cooling medium input pipe so that the heating/cooling input medium is fed into the cavity of the cavity mold; and wherein the second multi-pipe rotary joint is also fluidly coupled with a heating/cooling medium return pipe so that the heating/cooling return medium from the cavity of the cavity mold is returned to the first multi-pipe rotary joint.

In certain embodiments, the rotational frame subsystem further comprises a guide rod being fitted onto the inner frame, wherein the cavity mold slides along the guide rod to ensure accurate mating of the sub-molds.

In certain embodiments of the rotational frame subsystem, the inner frame driving motor is electrically coupled with an electrical supply panel by a power cable that is fitted along the outer frame, and the power cable passes an electrical slip ring that is fitted in the motor joint being disposed onto the support structure.

In certain embodiments, the rotational frame subsystem further comprises means for opening and closing the sub-molds of the cavity molds.

In certain embodiments of the rotational frame subsystem, the first or second multi-pipe rotary joint comprises an upper flanged both ends tube; three swivel connectors; supports; wherein the three swivel connectors are mounted on the supports and disposed within the upper flanged both ends tube; and a slew bearing being disposed between the upper flanged both ends tube when the joints are assembled.

In certain embodiments of the rotational frame subsystem, the first or second multi-pipe rotary joint comprises an input pipe insert being fitted over a hydraulic/pneumatic line, and fed by the heating/cooling medium input pipe for carrying the input heating and cooling mediums; a return pipe insert being fitted over the input pipe insert, and fed by the heating/cooling medium return pipe for carrying the return heating and cooling mediums; thereby the first and second multi-pipe rotary joints have a pipe within pipe configuration.

The present invention also provides a cavity mold system.

In certain embodiments, the cavity mold system comprises a cavity mold comprising two or more sub-molds; and one or more gasket disposed between two adjacent sub-molds; wherein the gasket seals heating and cooling mediums when the cavity mold is assembled; wherein each of the two or more sub-molds comprises an outer casing; an inner casing on which a molded item is formed, wherein the cavity mold is assembled, a cavity is formed in the space between the outer casing and the inner casing; at least one heating/cooling mediums input pipe that is fluidly coupled with heating and cooling medium sources and the cavity, wherein heating and cooling mediums are pumped or compressed via the at least one heating/cooling mediums input pipe into the cavity, thereby the heating and cooling mediums pass through the cavity of the cavity mold; and at least one heating/cooling mediums return pipe that is fluidly coupled with the heating and cooling medium sources and the cavity, wherein the heating and cooling mediums are pumped via the at least one heating/cooling mediums return pipe out of the cavity; and wherein at least one of the two or more sub-molds further comprises a feed channel being through the outer casing and the inner casing; wherein the feed channel allows molding materials to be fed into the inside of the inner casing; a rotational frame subsystem comprising an inner frame serving as a secondary rotating carriage supporting the cavity mold and opening/closing the cavity mold; an outer frame serving as a primary rotating carriage; wherein the inner frame is disposed within the outer frame; a support structure; an inner frame driving motor being disposed onto the outer frame, and being mechanically coupled with the inner frame; wherein the inner frame driving motor revolves the inner frame as the secondary rotation; and an outer frame driving motor being disposed onto the support structure via a motor joint, and mechanically coupled with the outer frame, where the outer frame driving motor revolves the outer frame as the main rotation; and a first multi-pipe rotary joint being mounted on the support structure and connecting the outer frame to the support structure; a second multi-pipe rotary joint being mounted on an inner frame and connecting the outer frame and the inner frame; wherein the first multi-pipe rotary joint allows pipes for input medium and return medium to be fed along a member of the outer frame to the second multi-pipe rotary joint; wherein the second multi-pipe rotary joint is fluidly coupled with the heating/cooling medium input pipe so that the heating/cooling input medium is fed into the cavity of the cavity mold; and wherein the second multi-pipe rotary joint is also fluidly coupled with the heating/cooling medium return pipe so that the heating/cooling return medium from the cavity of the cavity mold is returned to the first multi-pipe rotary joint; and a heating and cooling medium subsystem for providing the heating and cooling mediums and controlling the temperatures of the heating and cooling mediums.

In certain embodiments of the cavity mold system, the rotational frame subsystem further comprises a guide rod being fitted onto the inner frame, wherein the cavity mold slides along the guide rod to ensure accurate mating of the sub-molds.

In certain embodiments of the cavity mold system, the inner frame driving motor is electrically coupled with an electrical supply panel by a power cable that is fitted along the outer frame, and the power cable passes an electrical slip ring that is fitted in the motor joint being disposed onto the support structure.

In certain embodiments of the cavity mold system, the rotational frame subsystem further comprises means for opening and closing the sub-molds of the cavity molds.

In certain embodiments of the cavity mold system, the heating and cooling medium subsystem comprises a heating medium storage tank for storing the heating medium; a heating medium pump being disposed downstream of the heating medium storage tank; a heating medium metering means being disposed downstream of the heating medium pump; wherein the heating medium metering means monitors the temperature, volume and density of the heating medium passing through and feeds data to a PLC; a heating medium control valve being disposed downstream of the heating medium metering means; wherein the heating medium control valve adjusts the flow of the heating medium based on the PLC output command; a cooling medium storage tank for storing the cooling medium; a cooling medium pump being disposed downstream of the cooling medium storage tank; a cooling medium metering means being disposed downstream of the cooling medium pump; wherein the cooling medium metering means monitors the temperature, volume and density of the cooling medium passing through and feeds data to the PLC; a cooling medium control valve being disposed downstream of the cooling medium metering means; wherein the cooling medium control valve adjusts the flow of the cooling medium based on the PLC output command; an inline mixer being disposed downstream of both the heating medium control valve and the cooling medium control valve; wherein the inline mixer mixes the heating and cooling mediums are mixed to give a desired temperature to a heating/cooling input medium; a heating medium return control valve being disposed downstream of the first multi-pipe rotary joint; wherein the heating medium return control valve is controlled by the PLC to direct the heating return medium to the heating medium storage tank; and a cooling medium return control valve being disposed downstream of the first multi-pipe rotary joint; wherein the cooling medium return control valve is controlled by the PLC to direct the cooling return medium to the cooling medium storage tank.

In certain embodiments of the cavity mold system, the heating medium metering means and the cooling medium metering means are a Coriolis meter.

In certain embodiments of the cavity mold system, the first or second multi-pipe rotary joint comprises an upper flanged both ends tube; three swivel connectors; supports; wherein the three swivel connectors are mounted on the supports and disposed within the upper flanged both ends tube; and a slew bearing being disposed between the upper flanged both ends tube when the joints are assembled.

In certain embodiments of the cavity mold system, the first or second multi-pipe rotary joint comprises an input pipe insert being fitted over a hydraulic/pneumatic line, and fed by the heating/cooling medium input pipe for carrying the input heating and cooling mediums; a return pipe insert being fitted over the input pipe insert, and fed by the heating/cooling medium return pipe for carrying the return heating and cooling mediums; thereby the first and second multi-pipe rotary joints have a pipe within pipe configuration.

The objectives and advantages of the invention will become apparent from the following detailed description of preferred embodiments thereof in connection with the accompanying drawings.

### Brief Description of the Drawings

Preferred embodiments according to the present invention will now be described with reference to the Figures, in which like reference numerals denote like elements.
FIG 1 shows a schematic view of the cavity mold in accordance with one embodiment of the present invention.
FIG 2 shows a schematic view of the cavity mold in accordance with another embodiment of the present invention.
FIG 3 shows a schematic diagram illustrating the heating and cooling subsystem in accordance with one embodiment of the present invention.
FIG 4 shows a schematic diagram and perspective views of the cavity mold system in accordance with one embodiment of the present invention.
FIG 5 shows various views of the multi-pipe rotary joints in accordance with certain embodiments of the present invention.
FIG 6 provides schematic diagrams showing the demolding and ejection of molded parts in accordance with certain embodiments of the present invention.
FIG 7 provides schematic diagrams showing the filing and opening of the mold in accordance with certain embodiments of the present invention.

### Detailed Description of the Invention

The present invention may be understood more readily by reference to the following detailed description of certain embodiments of the invention.

Throughout this application, where publications are referenced, the disclosures of these publications are hereby incorporated by reference, in their entireties, into this application in order to more fully describe the state of art to which this invention pertains.

The present invention provides a cavity mold system that accurately controls the heat and cooling of the inner casing of the molds and thereby maximizes control over the melting and cooling of the raw material being molded.

The cavity mold system of the present invention comprises a cavity mold, a heating and cooling subsystem, and a bi-directional rotating subsystem. In brief, the cavity mold has a cavity formed between an inner casing and an outer casing. The heating and cooling subsystem monitors and controls the temperature of the mold. The bi-directional rotating subsystem enables to the heating and cooling media to be pumped into and out of the cavity during mold rotation.

For the cavity mold system of the present invention, to heat the mold, hot medium is pumped into and through the cavity of the mold transferring the required heat onto the inner process surface of the mold. The temperature of the heating medium is gradually increased to the desired optimum temperature for the material being molded. The temperature of the heating medium is adjusted by mixing hot and cold medium via a proportioning device (e.g., Coriolis meters or other similar devices) controlled by a Programmable Logic Controller (PLC).

Once the molten material has been evenly spread over the entire inner surface of the mold, the hot medium is replaced by pumping or compressing the cooling medium into the mold cavities which in turn solidifies the product lining the inner surface of the molds. The heating medium is driven out by the cooling medium and returned to the storage tank.

The cavity mold of the present invention can have various configuration and dimensions. For example, one cavity mold can have 2, 3 or even 4 sub-molds, where each sub-mold has its own configuration and dimension. When being used for production operation, all sub-molds are mated together to form one cavity mold.

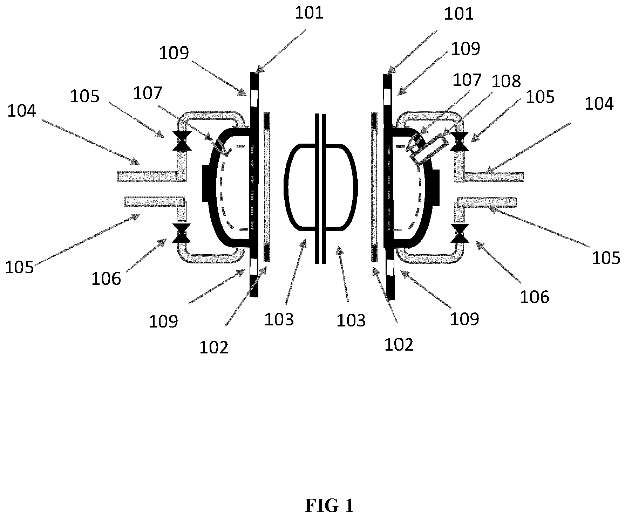

Referring now to FIG 1, there is provided a schematic view of the cavity mold in accordance with one embodiment of the present invention.

As shown in FIG 1, the cavity mold **100** has two sub-molds, where each sub-mold comprises:
an outer casing **101;**
a gasket **102** disposed between the joint of two sub-molds of the cavity mold 100; where the gasket **102** seals heating and cooling mediums when the two sub-molds are assembled into the cavity mold **100;** and
an inner casing **103** on which a rotational molded item is formed, where the inner casing **103** can be disassembled from the outer casing **101.**

The outer casing **101,** the gasket **102,** and the outer casing **103** are assembled to form one sub-mold. When the two sub-molds are assembled into the cavity mold **100,** a cavity is formed in the space between the outer casing **101** (the broken lines) and the inner casing **103.**

Referring still to FIG 1, each sub-mold of the cavity mold **100** further comprises:
at least one heating/cooling mediums input pipe **104** that is fluidly coupled with heating and cooling medium sources of the heating and cooling subsystem as described hereinbelow, where the heating and cooling mediums are pumped or compressed via the at least one heating/cooling mediums input pipe **104** into the cavity, thereby the heating and cooling mediums pass through the cavity of the cavity mold **100;**
at least one heating/cooling mediums return pipe **105** that is fluidly coupled with heating and cooling medium sources of the heating and cooling subsystem as described hereinbelow, where the heating and cooling mediums are pumped via at least one heating/cooling mediums return pipe **105** out of the cavity.
at least two isolation valves **106** for regulating the heating or cooling medium flows; where one of the at least two isolation valves **106** is disposed on the at least one heating/cooling mediums input pipe **104,** and one of the at least two isolation valves **106** is disposed at least one heating/cooling mediums return pipe **105;** and where the isolation valves **106** enables removal or replacement of cavity molds **100;**
at least one temperature sensor **107** being disposed on the outer casing **101** of each sub-mold and inside the cavity for recording the temperature of the heating and cooling mediums; and
Referring still to FIG 1, at least one sub-mold of the cavity mold **100** further comprises a feed channel **108** being through the outer casing **101** and the inner casing **103,** where the feed channel **108** allows molding materials to be fed into the inside of the inner casing **103.** In certain embodiments, the feed channel **108** is provided at all sub-molds of the cavity mold **100.** The feed channel **108** is also a vent to release any pressure that may build up inside the mold.

Referring still to FIG 1, at least two bushes **109** are provided on the mold flange of the sub-molds, where the bushes **109** allow a guide rod to ensure accurate alignment of the sub-molds.

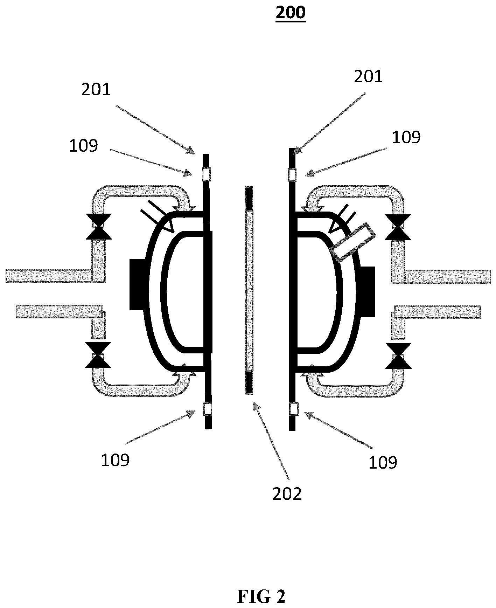

Referring now to FIG 2, there is provided a schematic view of the cavity mold in accordance with another embodiment of the present invention.

As shown in FIG 2, the cavity mold **200** has a similar configuration to the cavity mold **100** as shown in FIG 1, except for two aspects:
First, in each sub-mold **201,** the outer casing and inner casing are fixed (e.g. welded, cast, molded) together, and cavity is formed in the space between the outer casing and inner casing;
Second, one gasket **202** is disposed between the two fixed sub-molds **201;** thereby, the two fixed sub-molds **201** and the gasket **202** are assembled into the cavity mold **200.**

The heating/cooling medium input pipe, heating/cooling mediums return pipe, isolation valves, temperature sensor, feed channel, and bushes **109** are similar to the ones as described in FIG 1.

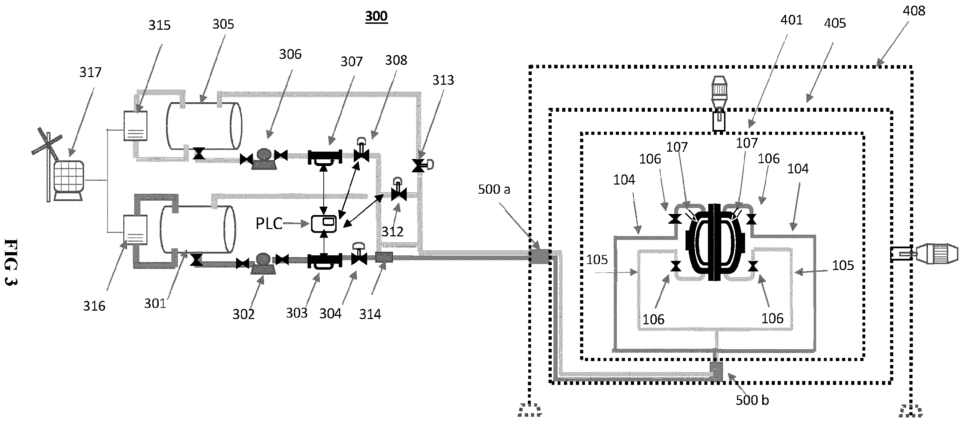

Referring now to FIG 3, there is provided a schematic diagram of the cavity mold system in accordance with one embodiment of the present invention, where a preferred configuration of the heating and cooling subsystem is provided. The heating and cooling subsystem controls the temperatures of the heating and cooling mediums. In principle, heating medium and cooling medium are kept in separate storage tanks and pumped through metering means (e.g. Coriolis meter) so that the heating and cooling mediums are mixed in an inline mixer **314** to give a desired temperature. The metering means are controlled by a Programmable Logic Controller (PLC).

As shown in FIG 3, the heating and cooling subsystem **300** comprises:
a heating medium storage tank **301** for storing the heating medium; in certain embodiments, the heating medium is received from a heater **316,** and the heater **316** can be coupled to a renewable energy source **317;** in certain embodiments, the heating medium storage tank **301** keeps the heating medium at a constant temperature by e.g. utilizing the heater **316;** in certain embodiments, the heater **316** could be installed inside the heating medium storage tank **301;**
a heating medium pump **302** being disposed downstream of the heating medium storage tank **301,** where the heating medium pump **302** feeds the heated medium at the stored temperature from the heating medium storage tank **301;**
a heating medium metering means **303** being disposed downstream of the heating medium pump **302,** where the heating medium metering means **303** monitors the temperature, volume and density of the heating medium passing through and feeds data to the PLC; in certain embodiments, the heating medium metering means **303** is a Coriolis meter;
a heating medium control valve **304** being disposed downstream of the heating medium metering means **303,** where the heating medium control valve **304** adjusts the flow of the heating medium based on the PLC output command;
a cooling medium storage tank **305** for storing the cooling medium received from a chiller **315;** in certain embodiments, the chiller **315** can be coupled to a renewable energy source **317;** in certain embodiments, the cooling medium storage tank **305** keeps the cooling medium at a constant temperature by e.g. the chiller **315;**
a cooling medium pump **306** being disposed downstream of the cooling medium storage tank **305,** where the cooling medium pump feeds the cooling medium at the stored temperature from the cooling medium storage tank **305;**
a cooling medium metering means **307** being disposed downstream of the cooling medium pump **306,** where in the cooling medium metering means monitors the temperature, volume and density of the cooling medium passing through and feeds data to the PLC; in certain embodiments, the cooling medium metering means **303** is a Coriolis meter;
a cooling medium control valve **308** being disposed downstream of the cooling medium metering means **307,** where the cooling medium control valve **308** adjusts the flow of the cooling medium based on the PLC output command;
an inline mixer **314** being disposed downstream of both the heating medium control valve **304** and the cooling medium control valve **308,** where the inline mixer **314** mixes the heating and cooling mediums are mixed to give a desired temperature to a heating/cooling input medium;
a first multi-pipe rotary joint **500a** and a second multi-pipe rotary joint **500b** being sequentially disposed downstream of the inline mixer **314** to receive the heating/cooling input medium, wherein the first multi-pipe rotary joint **500a** is mounted between an outer frame **405** and a support structure **408,** and the second multi-pipe rotary joint **500b** is mounted on an inner frame **401;** where the first multi-pipe rotary joint **500a** allows pipes for input medium and return medium to be fed along a member of the outer frame to the second multi-pipe rotary joint **500b;** where the second multi-pipe rotary joint **500b** is fluidly coupled with the heating/cooling medium input pipe **104** so that the heating/cooling input medium is fed into the cavity of the cavity mold **100,** and where the second multi-pipe rotary joint **500b** is also fluidly coupled with the heating/cooling medium return pipe **105** so that the heating/cooling return medium from the cavity of the cavity mold **100** is returned to the first multi-pipe rotary joint **500a;**
a heating medium return control valve **312** being disposed downstream of the first multi-pipe rotary joint **500a;** where the heating medium return control valve **312** is controlled by the PLC to direct the heating return medium to the heating medium storage tank **301;** and
a cooling medium return control valve **313** being disposed downstream of the first multi-pipe rotary joint **500a;** where the cooling medium return control valve **313** is controlled by the PLC to direct the cooling return medium to the cooling medium storage tank **305.**

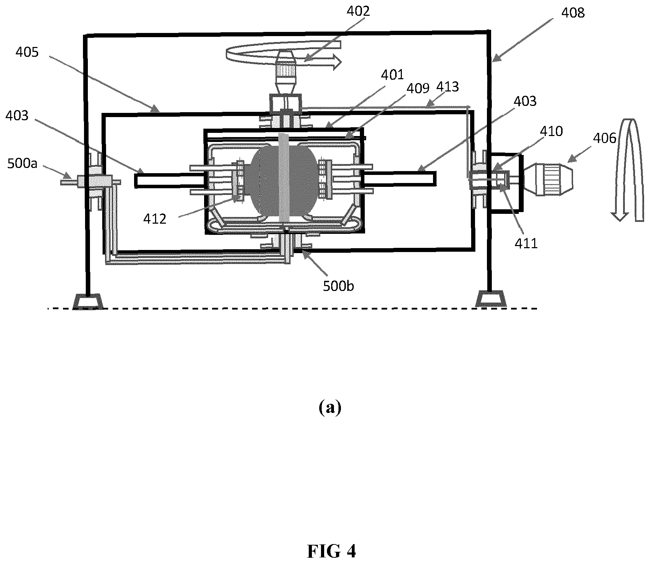

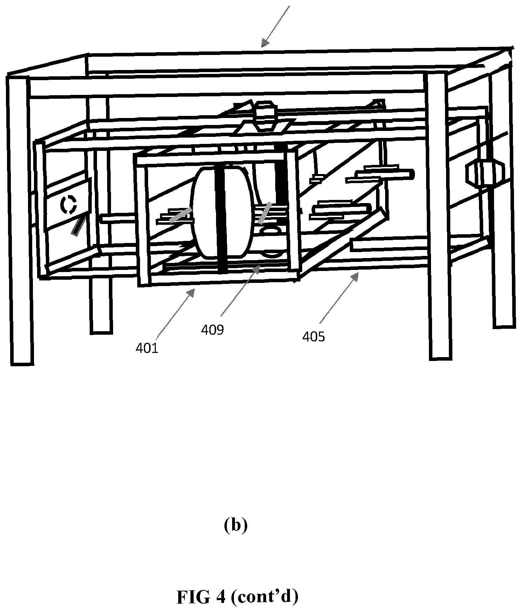

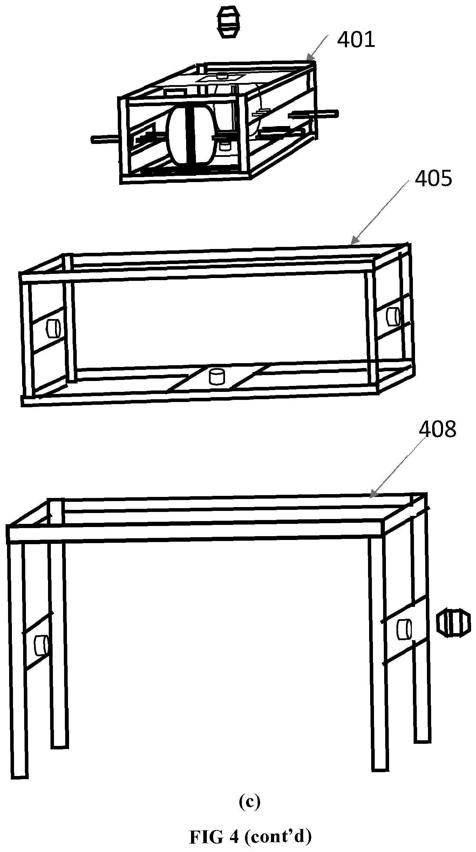

Referring now to FIG 4, there are provided (a) a schematic diagram, (b) a perspective view (assembled), and (c) a perspective view (disassembled) of the cavity mold system in accordance with one embodiment of the present invention, where a preferred configuration of a bi-directional rotating subsystem **400** is provided, where the heating and cooling subsystem **300** is not shown, and where the cavity mold **100, 200** is included. As shown in FIG 4, the bi-directional rotating subsystem **400** comprises:
an inner frame (i.e. spider) **401** serving as a secondary rotating carriage supporting the molds and opening/closing the molds;
an outer frame **405** serving as a primary rotating carriage, where the inner frame **401** is disposed within and supported by the outer frame **405** that in turn is supported by a support structure **408;**
an inner frame driving motor **402** being disposed onto the outer frame **405** mechanically coupled with the inner frame **401,** where the inner frame driving motor **402** revolves the inner frame **401** as the secondary rotation; in certain embodiments, the inner frame driving motor **402** is electrically coupled with an electrical supply panel by a power cable **413** that is fitted along the outer frame **405,** and the power cable **413** passes an electrical slip ring **411** that is fitted in a motor joint **410** being disposed onto the support structure **408;** in certain embodiment, the electrical slip ring **411** can be commercially available.
means **403** for opening and closing the sub-molds of the cavity molds; in certain embodiments, the means **403** are attached to the inner frame **401** until the time when the mold is being changed;
an outer frame driving motor **406** being disposed onto the support structure **408** via the motor joint **410,** and mechanically coupled with the outer frame **405,** where the outer frame driving motor **406** revolves the outer frame **405** as the main rotation;
a guide rod **409** being fitted onto the inner frame **401,** where the molds slide along the guide rod **409** to ensure accurate mating of the sub-molds;
a plurality of springs **412** being disposed between the means **403** and the cavity mold **100, 200** to ensure that the pressure is maintained to keep the sub-molds closed.

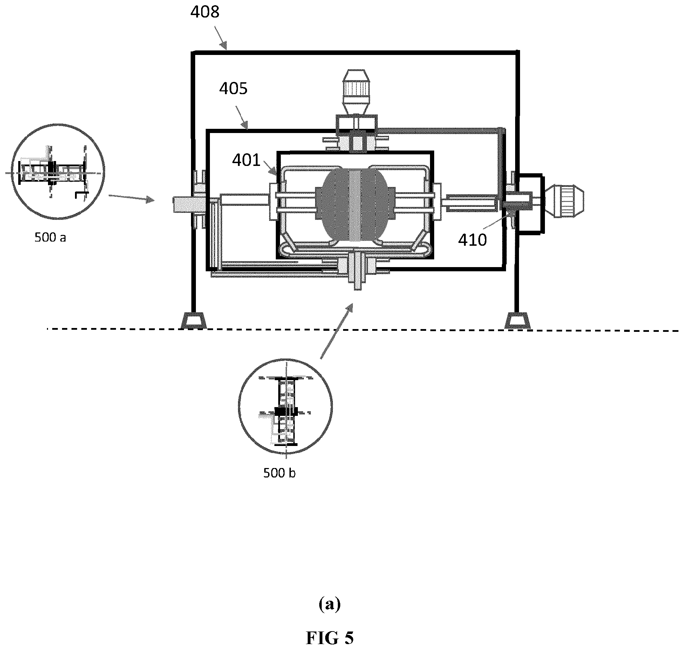

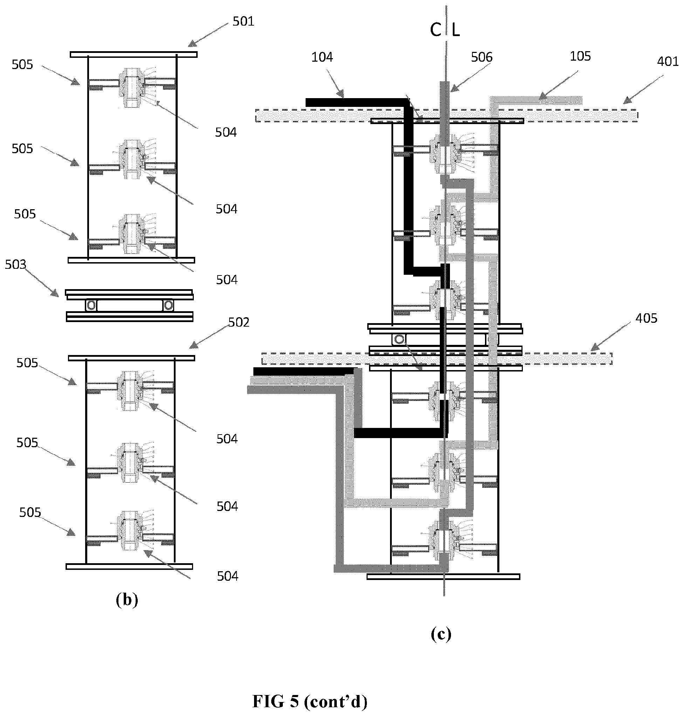

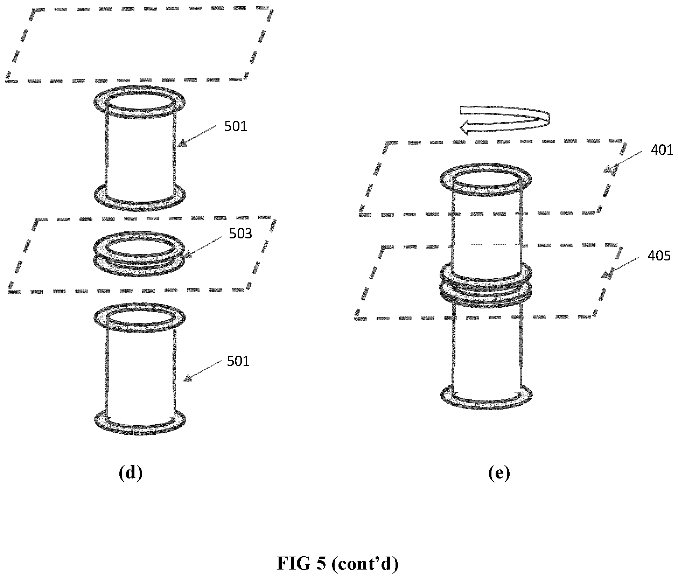

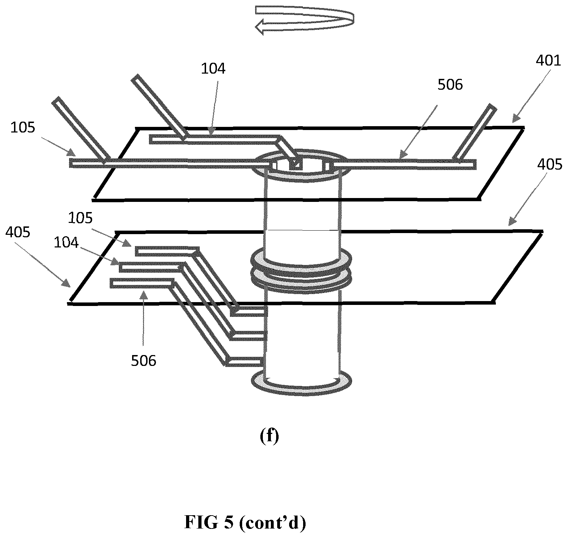

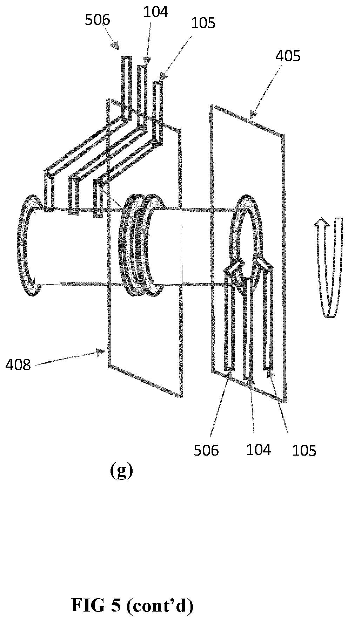

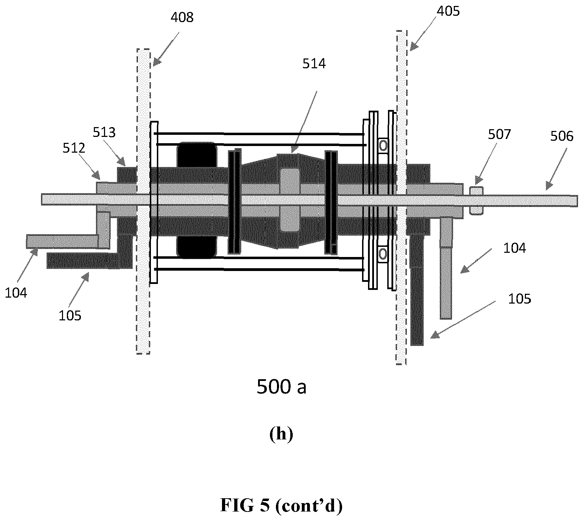

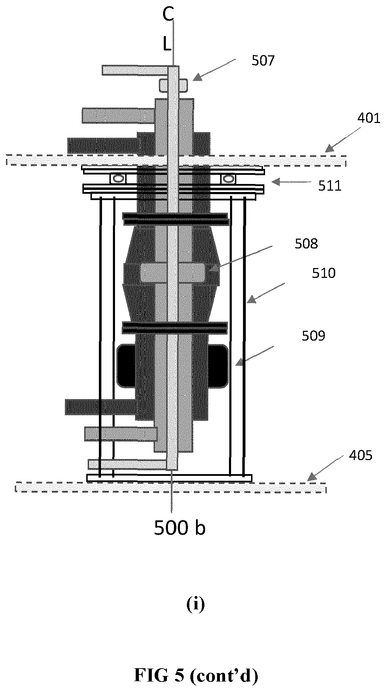

Referring now to FIG 5, there are provided various views of the multi-pipe rotary joints in accordance with certain embodiments of the present invention. The multi-pipe rotary joints allow the heating/cooling medium input and return pipes to carry the heating and cooling mediums to the cavity of cavity molds and to return the storage tanks. The multi-pipe rotary joints also allow the hoses for hydraulic or pneumatic oil/air required to operate the opening and closing mechanism for the molds.

Referring now to FIG 5(a), the first multi-pipe rotary joint **500a** connects the outer frame **405** to the support structure **408,** and the second multi-pipe rotary joint **500b** connects the outer frame **405** and the inner frame **401.** The first multi-pipe rotary joint **500a** allows the pipes, tubes or hoses originated from the proportioning supply and hydraulic/pneumatic systems to be fed through the support structure **408** and affixed to the outer frame **405.** The first multi-pipe rotary joint **500a** not only allows the pipes, tubes or hoses to rotate on the outer frame **405** but also acts as one of the supports between the outer frame **405** and the support structure **408.** The second multi-pipe rotary joint **500b** not only allows the pipes, tubes or hoses to rotate on the inner frame **401** but also acts as one of the supports between the outer frame **405** and the inner frame **401.**

Referring now to FIG 5(b), there is provided a section view of the first/second multi-pipe rotary joints **500a, 500b** showing the components that, when assembled, form the multi-pipe rotary joints. The multi-pipe rotary joints **500a, 500b** comprise an upper flanged both ends tube **501,** three swivel connectors **504,** and supports **505,** where the three swivel connectors **504** are mounted on the supports **505** and disposed within the tubes **501, 502.** The multi-pipe rotary joints **500a, 500b** further comprise a slew bearing **503** being disposed between the tube **501** when the joints are assembled. The lower section **502** is similar to the upper section **501.**

Referring now to FIG 5(c), there is provided a section view of the second multi-pipe rotary joint **500b** showing how the pipes, tubes or hoses are affixed to the rotary connectors. In certain embodiments, the rotary connectors can be commercially available ones. The connectors must be such that they are all mounted on the center line of the rotating axis of the frame. Each pipe, tube or hose has two rotary connectors to avoid clashes of lines.

The center line of the first multi-pipe rotating joint **500a** is of the outer frame **405.** The configuration of the pipes, tubes or hoses is such that pipes, tubes or hoses attached to the outer frame **405** can rotate while the pipes, tubes or hoses can be affixed the outer structure support **408** avoiding clashes of pipes, tubes or hoses. The configuration of the first multi-pipe rotary joint **500a** shares the same principle of that of the second multi-pipe rotary joint **500b.**

Referring now to FIG 5(d) and (e), there are provided perspective views of the second multi-pipe rotary joint.

Referring now to FIG 5(f), there is provided a perspective view of the second multi-pipe rotary joint **500b,** where the pipes, tubes or hoses would affix to a structural member of the inner frame **401** and to structural member of the outer frame **405.**

Referring now to FIG 5(g), there is provided a perspective view of the first multi-pipe rotary joint **500a,** where the pipes, tubes or hoses would affix to a structural member of the outer frame **405** and to structural member of the support structure **408,** leading to the heating and cooling mediums and hydraulic/pneumatic systems.

Referring now to FIG 5(h) and (i), there are provided schematic views of the first and second multi-pipe rotary joints **500a, 500b** in accordance with another embodiment of the present invention. As shown in FIG 5(h) and (i), the first and second multi-pipe rotary joints **500a, 500b** have a pipe within pipe configuration, where the pipe, tube or hose carrying the hydraulic oil of pneumatic air **506** forms the core of the multi-pipe rotary joints **500a, 500b,** and the swivel connector **507** for the hydraulic/pneumatic line **506** is fitted outside of the multi-pipe rotary joints **500a, 500b.**

The pipe insert **512** is fitted over the hydraulic/pneumatic line **506,** and fed by the heating/cooling medium input pipe **104** for carrying the input heating and cooling mediums. The swivel connector **508** for the pipe insert **512** is fitted inside a pipe insert **513.**

The pipe insert **513** is fitted over the pipe insert **512.** To accommodate the swivel connector **508,** there is a flanged split expansion piece **514.** The pipe insert **513** is fed by the heating/cooling medium return pipe **105** for carrying the return heating and cooling mediums

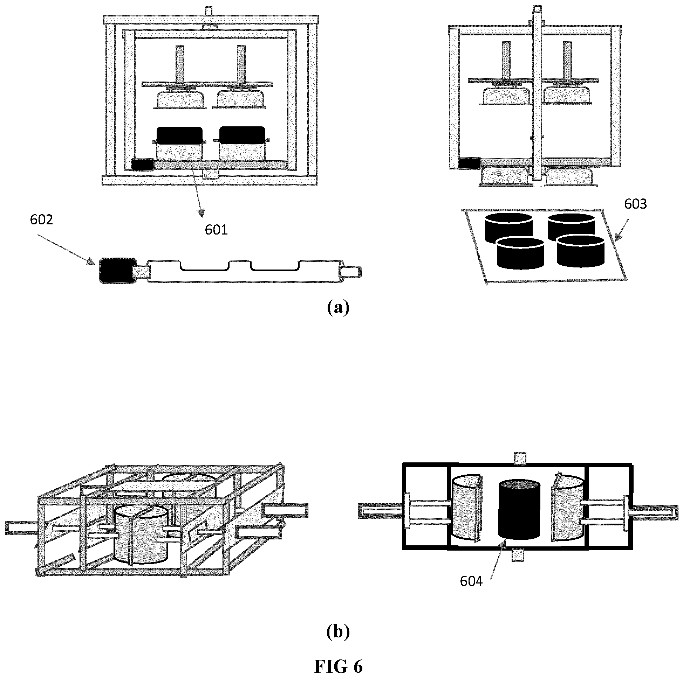

Referring now to FIG 6, there are provided schematic diagrams showing the demolding and ejection of molded parts in accordance with certain embodiments of the present invention. In certain embodiments, the mold can be opened by hydraulic, pneumatic pistons or electrical actuators.

As shown in FIG 6(a), the top part of the mold is lifted vertically to reveal the molded part which remains in the lower part. The very good cooling system of the cavity mold system ensures the parting of the mold from the molded section. Mold release coating can be applied to the mold but not normally necessary if the mold is cooled to a low temperature ensuring that the molded piece is no longer sticky.

The lower part of the molds is mounted on a round axle 601 which is rotated by means of an actuator **602** which when rotated 180 degrees releases the molded part(s) **603.**

As shown in FIG 6(b), the molded part(s) **604** is released by way of side ways movement of two pistons or act.

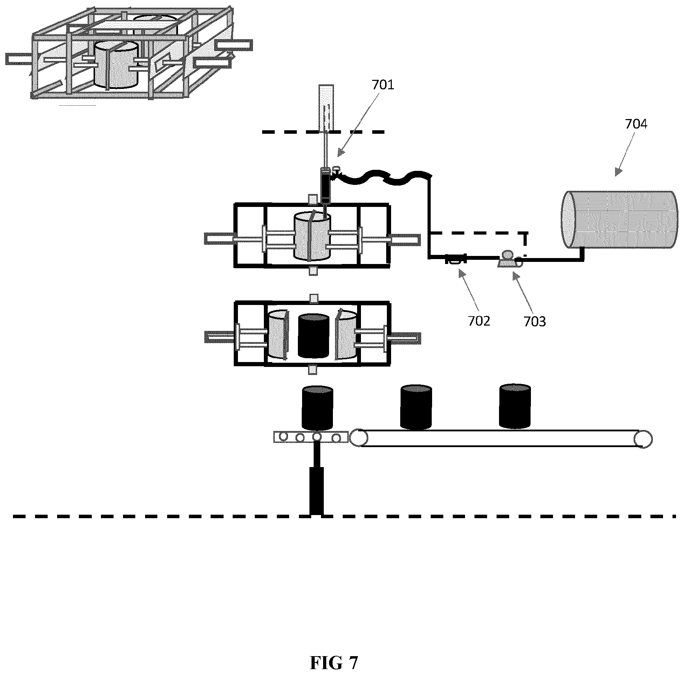

Referring now to FIG 7, there are provided schematic diagrams showing the filing and opening of the mold in accordance with certain embodiments of the present invention.

As shown in FIG 7, the filling comprises:
a filling ejector **701** for injection of product to be contained in the molded container;
a positive displacement measuring device **702** for accurately controlling the quantity to be filled; in certain embodiments, the device **702** is a Coriolis meter;
a pump or compressor **703** to supply the product;
a storage tank **704** for the product to fill the casing;
swivel mold demolding system **705.**

The cavity mold system of the present invention has many advantages.

The single work station cavity mold system gives the possibility of many different configurations and methods of demolding/ejecting the finished molded item. Designs can be with single or double powered pneumatic, hydraulic cylinders, electrical actuators, worm gears etc. mold closing devices.

The invention enables automatic opening and closing of molds, injection of material to be molded, heating to optimum melt temperature of material to be molded, gradual cooling in a controlled manner to avoid molded part distortions, accurate control of major and minor axis RPM in whatever ratio required, thereby opening up many possibilities that current rotational molding does not.

The single station configuration allows rotational molding to be carried out at one station; in contrast, the current rotational molding requires three different stations.

The mold or molds are mounted on a frame known as a spider in the world of rotational molding; the spider is the internal frame. In current rotational molding designs, the spider is rotated, driven by a chain and beveled gears linked to the main axis motor which is mounted on the outer frame. One reason for this is that the whole spider is normally entered into the oven so if a motor were used, this would require a very special motor capable of withstanding temperatures up to 250°C. With the present invention, as the spider is not subjected to heating in an oven, a standard motor can be utilized. This allows adjusting the speed of rotation of the spider to optimize the molding process as it does not rely on gearing reliant on the main frame motor.

The heating and cooling mediums control module is capable of directly heating and cooling the inner casing by directly utilizing heating and cooling mediums. The temperatures of these mediums can be controlled to accurately deliver the optimum processing temperatures, ensuring that materials are not over-heated, being heated too rapidly, or being cooled too rapidly. This maximizes quality control during molding processes.

The full process, heating & cooling of mold surfaces and production of molded items is achieved at one work station, eliminating the majority of the constraints of the current three station process.

Furthermore, there are advantages of the invention relative to quality control.

The critical function in Rotational Molding is to get heat to the inner surface of the mold to melt the plastic powder, pellets or keep liquid hot which in turns is distributed evenly on the inner surface of the mold by biaxial rotating of the mold(s).

With the invention, the design of the heating and cooling systems is such that the hot and chilled media are accurately controlled and channeled directly to the surface that requires heating and cooling, not the total mold and environment around the mold, including supports which wastes a very high proportion of the energy utilized in current cavity mold systems.

With current rotational molding system where the total mold is inserted into an oven, there can be heat blasts from the ovens burners creating hot spots on molds. This can cause burning of the product being molded. Degradation of resin due to too high temperatures also can occur. To the contrary, there can also be spots that are not heated sufficiently leading to insufficient fusion of resins/materials.

The invention applies a controlled heat or cold medium directly to the inner surface of the molds. The molds are designed with a cavity between the inner and outer surfaces into which the heated or chilled thermal oil, water, liquid ice, air or gases are pumped or compressed. The main body of the mold does not need to be heated to the processing temperature. By having the inside surface of the mold, which the processing surface, made of a good conducting material for example aluminum, copper, stainless steel, iron, brass, lead or silver with the outer section of the mold constructed of a poor conducting material such as rubber, fiber glass, and most plastics, the dissipation /loss is kept to an absolute minimum thereby maximizing the efficiency of the heating and cooling system.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the scope of the present invention. Accordingly, the scope of the present invention is defined by the appended claims and is supported by the foregoing description.

## Claims

1. A cavity mold system comprising:
a cavity mold comprising:
two or more sub-molds; and
one or more gasket disposed between two adjacent sub-molds; wherein the gasket seals heating and cooling mediums when the cavity mold is assembled;
wherein each of the two or more sub-molds comprises:
an outer casing;
an inner casing on which a molded item is formed, wherein the cavity mold is assembled, a cavity is formed in the space between the outer casing and the inner casing;
at least one heating/cooling mediums input pipe that is fluidly coupled with heating and cooling medium sources and the cavity, wherein heating and cooling mediums are pumped or compressed via the at least one heating/cooling mediums input pipe into the cavity, thereby the heating and cooling mediums pass through the cavity of the cavity mold; and
at least one heating/cooling mediums return pipe that is fluidly coupled with the heating and cooling medium sources and the cavity, wherein the heating and cooling mediums are pumped via the at least one heating/cooling mediums return pipe out of the cavity; and
wherein at least one of the two or more sub-molds further comprises a feed channel being through the outer casing and the inner casing; wherein the feed channel allows molding materials to be fed into the inside of the inner casing;
a rotational frame subsystem comprising:
an inner frame serving as a secondary rotating carriage supporting the cavity mold and opening/closing the cavity mold;
an outer frame serving as a primary rotating carriage; wherein the inner frame is disposed within the outer frame;
a support structure;
an inner frame driving motor being disposed onto the outer frame, and being mechanically coupled with the inner frame; wherein the inner frame driving motor revolves the inner frame as the secondary rotation; and
an outer frame driving motor being disposed onto the support structure via a motor joint, and mechanically coupled with the outer frame, where the outer frame driving motor revolves the outer frame as the main rotation; and
a first multi-pipe rotary joint being mounted on the support structure and connecting the outer frame to the support structure;
a second multi-pipe rotary joint being mounted on an inner frame and connecting the outer frame and the inner frame; wherein the first multi-pipe rotary joint allows pipes for input medium and return medium to be fed along a member of the outer frame to the second multi-pipe rotary joint; wherein the second multi-pipe rotary joint is fluidly coupled with the heating/cooling medium input pipe so that the heating/cooling input medium is fed into the cavity of the cavity mold; and wherein the second multi-pipe rotary joint is also fluidly coupled with the heating/cooling medium return pipe so that the heating/cooling return medium from the cavity of the cavity mold is returned to the first multi-pipe rotary joint; and
a heating and cooling medium subsystem for providing the heating and cooling mediums and controlling the temperatures of the heating and cooling mediums.

2. The cavity mold system of claim 1, wherein the rotational frame subsystem further comprises a guide rod being fitted onto the inner frame, wherein the cavity mold slides along the guide rod to ensure accurate mating of the sub-molds.

3. The cavity mold system of claim 1, wherein the inner frame driving motor is electrically coupled with an electrical supply panel by a power cable that is fitted along the outer frame, and the power cable passes an electrical slip ring that is fitted in the motor joint being disposed onto the support structure.

4. The cavity mold system of claim 1, wherein the rotational frame subsystem further comprises means for opening and closing the sub-molds of the cavity molds.

5. The cavity mold system of claim 1, wherein the heating and cooling medium subsystem comprises:
a heating medium storage tank for storing the heating medium;
a heating medium pump being disposed downstream of the heating medium storage tank;
a heating medium metering means being disposed downstream of the heating medium pump; wherein the heating medium metering means monitors the temperature, volume and density of the heating medium passing through and feeds data to a PLC;
a heating medium control valve being disposed downstream of the heating medium metering means; wherein the heating medium control valve adjusts the flow of the heating medium based on the PLC output command;
a cooling medium storage tank for storing the cooling medium;
a cooling medium pump being disposed downstream of the cooling medium storage tank;
a cooling medium metering means being disposed downstream of the cooling medium pump; wherein the cooling medium metering means monitors the temperature, volume and density of the cooling medium passing through and feeds data to the PLC;
a cooling medium control valve being disposed downstream of the cooling medium metering means; wherein the cooling medium control valve adjusts the flow of the cooling medium based on the PLC output command;
an inline mixer being disposed downstream of both the heating medium control valve and the cooling medium control valve; wherein the inline mixer mixes the heating and cooling mediums are mixed to give a desired temperature to a heating/cooling input medium;
a heating medium return control valve being disposed downstream of the first multi-pipe rotary joint; wherein the heating medium return control valve is controlled by the PLC to direct the heating return medium to the heating medium storage tank; and
a cooling medium return control valve being disposed downstream of the first multi-pipe rotary joint; wherein the cooling medium return control valve is controlled by the PLC to direct the cooling return medium to the cooling medium storage tank.

6. The cavity mold system of claim 5, wherein the heating medium metering means and the cooling medium metering means are a Coriolis meter.

7. The cavity mold system of claim 1, wherein the first or second multi-pipe rotary joint comprises:
an upper flanged both ends tube;
three swivel connectors;
supports; wherein the three swivel connectors are mounted on the supports and disposed within the upper flanged both ends tube; and
a slew bearing being disposed between the upper flanged both ends tube when the joints are assembled.

8. The cavity mold system of claim 1, wherein the first or second multi-pipe rotary joint comprises:
an input pipe insert being fitted over a hydraulic/pneumatic line, and fed by the heating/cooling medium input pipe for carrying the input heating and cooling mediums;
a return pipe insert being fitted over the input pipe insert, and fed by the heating/cooling medium return pipe for carrying the return heating and cooling mediums;
thereby the first and second multi-pipe rotary joints have a pipe within pipe configuration.

9. The cavity mold system of claim 1, wherein each of the two or more sub-molds further comprises:
at least two isolation valves for regulating the heating or cooling medium flows; wherein one of the at least two isolation valves is disposed on the at least one heating/cooling mediums input pipe, and one of the at least two isolation valves is disposed at least one heating/cooling mediums return pipe.

10. The cavity mold system of claim 1 or claim 9, wherein each of the two or more sub-molds further comprises:
at least one temperature sensor being disposed on the outer casing and inside the cavity for recording the temperature of the heating and cooling mediums.

11. The cavity mold system of claim 1, wherein the feed channel serves as a vent to release any pressure inside the cavity mold.

12. The cavity mold system of claim 1, wherein each of the two or more sub-molds further comprises at least two bushes being provided on the mold flange of the sub-molds for allowing a guide rod to ensure accurate alignment of the sub-molds.

13. The cavity mold system of claim 1, wherein the inner casing and the outer casing are capable of being assembled and disassembled;
thereby the inner casing is replaceable.

14. The cavity mold system of claim 1, wherein the inner casing and the outer casing are fixed together.

15. The cavity mold system of claim 9, wherein the at least two isolation valves enable removal or replacement of the cavity mold.
